# DEMANDE DE BREVET EUROPEEN

(11) **EP 1 463 282 A1**
(43) Date de publication de la demande: **29.09.2004**
(21) Numéro de dépôt: 04101248.5
(22) Date de dépôt: 25.03.2004
(51) Int. Cl.: H04M 17/02

(54) **Système de téléphonie publique sécurisée**

(30) Priorité: 27.03.2003 FR 0303807
(71) Demandeur: Axalto S.A., 92120 Montrouge (FR)
(72) Inventeur: MENGUS, Jean-Paul, 95360, Montmagny (FR)
(74) Mandataire: Weihs, Bruno

(57) **Abrégé**

Système de téléphonie publique sécurisé comportant au moins un téléphone public (10) relié à un réseau de télécommunication (1) et un dispositif de sécurisation apte à superviser les échanges d'informations entre ledit téléphone public et au moins une partie des numéros appelés, caractérisé en ce que ledit dispositif de sécurisation est formé par un serveur à distance (20) par lequel transite les appels à sécuriser, ledit téléphone public (10) comportant des premiers moyens pour discriminer les appels devant être sécurisés à partir des premiers chiffres des numéros appelés, des seconds moyens pour se connecter audit serveur (20) sitôt identifié un appel à sécuriser et avant même la fin de la numérotation, et des troisièmes moyens pour adresser audit serveur (20) les informations échangées entre ledit téléphone et les numéros appelés, sous une forme appropriée.

## Description

La présente invention concerne le domaine des télécommunications et notamment celui des réseaux de téléphonie publique. La présente invention concerne plus spécifiquement un système de téléphonie publique sécurisée.

La présente invention concerne donc une installation téléphonique pour la transmission d'informations sur une ligne téléphonique comprenant un poste téléphonique public du type sans abonnement et un serveur de sécurisation associé audit poste téléphonique.

Les postes téléphoniques publics permettent, moyennant paiement (par pièces, jetons ou cartes), aux usagers de communiquer des informations, telles que la voix ou des données, à travers une ligne téléphonique. La taxation téléphonique se fait par comptage d'impulsions de taxation émises au niveau d'un central téléphonique ou bien encore directement par les circuits électroniques du poste téléphonique, ce dernier comportant alors sa propre table de taxation.

Comme tous les appareils délivrant, en libre service, des biens et des services de valeur, les téléphones publics sont exposés à des attaques de la part de fraudeurs. Parmi les attaques les plus fréquentes concernant l'installation téléphonique proprement dite, on peut citer le détournement de la ligne téléphonique reliant le poste téléphonique public au central téléphonique en connectant directement à celle-ci un poste téléphonique classique ou bien encore en modifiant les données transmises sur cette ligne comme les données de taxation lorsque ces dernières transitent sur la ligne.

Pour répondre à de telles attaques, la demanderesse a développé des outils de sécurisation de la ligne consistant à établir une authentification entre un poste téléphonique et un module associé monté sur la ligne de transmission reliant le poste téléphonique au central téléphonique et à interrompre la communication en cas de tentative de fraude.

Ces outils sont basés sur l'installation sur la ligne téléphonique d'un module de contrôle associé à chaque poste téléphonique à sécuriser. Le poste téléphonique présente une structure et des circuits particuliers qui permettent l'échange entre le module de contrôle et le poste téléphonique d'informations d'authentification qui sont comparées pour vérifier que le poste téléphonique est autorisé à être utilisé.

La présente invention se présente comme une variante de tels outils en offrant un système de sécurisation qui soit tout à la fois particulièrement performant, simple et peu coûteux à mettre en oeuvre.

Le système de téléphonie publique sécurisé selon l'invention est donc du type comportant au moins un téléphone public relié à un réseau de télécommunication et un dispositif de sécurisation apte à superviser les échanges d'informations entre ce téléphone public et au moins une partie des numéros appelés.

Selon l'invention, le système de téléphonie publique sécurisé est caractérisé en ce que le dispositif de sécurisation est formé par un serveur à distance par lequel transite les appels à sécuriser, ledit téléphone public comportant des premiers moyens pour discriminer les appels devant être sécurisés à partir des premiers chiffres des numéros appelés, des seconds moyens pour se connecter audit serveur sitôt identifié un appel à sécuriser et avant même la fin de la numérotation, et des troisièmes moyens pour adresser audit serveur les informations échangées entre ledit téléphone et les numéros appelés, sous une forme appropriée.

Selon une autre caractéristique du système de téléphonie publique sécurisé objet de la présente invention, le téléphone public comporte des moyens pour transmettre les communications au serveur sous la forme de données numérisées codées.

Selon une autre caractéristique du système de téléphonie publique sécurisé objet de la présente invention, le téléphone public est équipé du protocole de communication IP et en ce que les sessions d'échanges d'informations entre le téléphone public et le serveur utilisent ce protocole IP, la voix étant codée en VoIP.

Selon une autre caractéristique du système de téléphonie publique sécurisé objet de la présente invention, le téléphone comporte des moyens de sélection aptes à diriger une partie des appels vers le serveur, les appels dirigés vers le serveur étant sélectionnés selon des critères prédéterminés.

Selon une autre caractéristique du système de téléphonie publique sécurisé objet de la présente invention, les critères de sélection des appels dirigés vers ledit serveur comprennent le coût des communications.

Selon une autre caractéristique du système de téléphonie publique sécurisé objet de la présente invention, le téléphone public est connecté au réseau de télécommunication par l'intermédiaire d'un central téléphonique et ce central comprend des moyens aptes à refuser toute communication directe avec un numéro d'appel répondant aux critères prédéterminés de sélection selon lesquels cette communication doit transiter par le serveur.

Selon une autre caractéristique du système de téléphonie publique sécurisé objet de la présente invention, le téléphone public adresse les appels ne répondant pas aux critères prédéterminés de sélection, sans traitement particulier et en particulier sans codage numérique de la voie.

Selon une autre caractéristique du système de téléphonie publique sécurisé objet de la présente invention, le serveur comprend des moyens aptes à synchroniser et à réguler les sessions d'échanges d'informations entre le téléphone public et les numéros appelés transitant par le serveur.

Selon une autre caractéristique du système de téléphonie publique sécurisé objet de la présente invention, le serveur comprend des moyens aptes à authentifier les sessions d'échanges d'informations entre le téléphone public et les numéros appelés transitant par le serveur.

Selon une autre caractéristique du système de téléphonie publique sécurisé objet de la présente invention, le serveur comporte des moyens appropriés pour transférer des données au téléphone public parallèlement aux sessions d'échanges d'informations entre ledit téléphone et les numéros appelés transitant par le serveur, ces données concernant notamment la taxation des sessions et les informations liées au fonctionnement du dudit téléphone

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1 est une vue simplifiée présentant le système de téléphonie publique sécurisé selon l'invention ;
- la figure 2 est un bloc diagramme précisant le fonctionnement du système de téléphonie publique sécurisé selon l'invention.

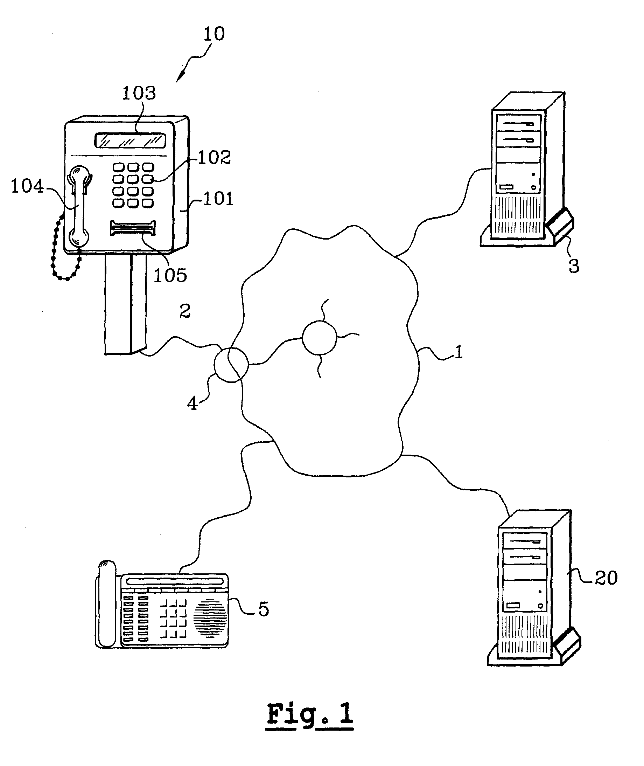

Sur la figure 1 apparaît représenté un téléphone référencé 10 qui appartient à un réseau de téléphonie publique.

Un tel réseau comprend généralement entre plusieurs dizaines à plusieurs milliers de téléphones, voire plusieurs dizaines de milliers, suivant sa couverture territoriale.

Le téléphone 10 est, de façon classique, destiné à être utilisé en libre service par des usagers, lesquels moyennant paiement, peuvent effectuer des communications téléphoniques en direction de postes d'abonnés 5, consulter des services de type Audiotel 3, ou encore accéder au Web et à l'Internet ou à des serveurs d'informations résidant sur des réseaux privés.

Le poste téléphonique 10 comprend de façon connue un boîtier 101 muni d'un clavier 102 pour composer un numéro d'appel, un dispositif d'affichage 103 par exemple à cristaux liquides et un combiné téléphonique 104. Le poste téléphonique 10 comprend en outre un dispositif de lecture/écriture de cartes à mémoire dont on voit la fente d'introduction 105. Bien entendu le poste téléphonique peut être équipé d'un système d'encaissement à pièces en complément ou en remplacement du dispositif de lecture/ écriture des cartes de paiement.

Le téléphone 10 est connecté à un réseau de communication 1 qui, dans l'exemple illustré à la figure 1, est le réseau téléphonique public commuté RTPC ou PSTN (acronyme de Public Switching Telephone Network).

La connexion du téléphone 10 au réseau RTPC 1 s'effectue au moyen d'une liaison filaire 2 (à deux fils) qui débouche dans un central téléphonique 4 qui est soit un central local de rattachement CLR ou un centre à autonomie d'acheminement CAA.

Ce réseau 1 pourrait également être constitué par un réseau de type numérique ISDN (Integrated Services Digital Network).

Par ailleurs, le téléphone public 10 comporte des ressources matérielles et logicielles permettant son fonctionnement et notamment de débiter les usagers des montants correspondants aux coûts des communications ou des services utilisés, les usagers pouvant payer soit au moyen de cartes de paiement, cartes téléphoniques ou bancaires, soit au moyen de pièces de monnaie.

Ces ressources matérielles et logicielles sont aujourd'hui bien connues et ne nécessitent donc pas de plus amples descriptions.

On précisera toutefois quel le téléphone 10 comporte une unité électronique de commande et de contrôle formée par un microprocesseur ou microcontrôleur, non figuré, comportant classiquement une unité centrale (UC) des interfaces entrées/sorties (I/O) et de différents types de mémoires (RAM, ROM, EPROM, ...). Ce microcontrôleur est donc à même de commander et de superviser le fonctionnement de l'appareil téléphonique 10 selon des programmes appropriés.

Ainsi, la fente 105 coopère avec des moyens de guidage non figurés qui amènent la carte dans une position de traitement où les plages externes de contact électrique de la carte sont connectées aux éléments de connexion de la tête de lecture/écriture également non figurée. Un circuit de traitement contrôlé par le microcontrôleur commande la lecture ou l'écriture de nouvelles informations dans la mémoire de la carte.

En effet, dans le cas des cartes prépayées téléphoniques, une première zone de mémoire contient une information d'identification et une seconde zone de mémoire contient les soldes successifs de la carte. Dans le cas où la mémoire de la carte est type PROM, celle-ci contient un certain nombre de points de mémoire qui sont initialement vierge (état 0). Chaque point de mémoire correspond à un montant unitaire. Le solde est modifier en faisant passer de façon irréversible de l'état 0 à l'état 1 un nombre entier de points correspondant au montant à débiter associé à l'impulsion de taxation émise par le microcontrôleur. Le passage de l'état 0 à l'état 1 est obtenu en appliquant aux points mémoire considérés une tension d'écriture.

De plus, le téléphone 10 est équipé du protocole de communication IP (Internet Protocol) ainsi que des protocoles TCP ou UDP conformes aux recommandations techniques de l'IETF («internet Engineering Task Force »). Enfin, la couche physique du téléphone 10 est réalisée par des modems analogiques (ou numériques selon la nature du réseau 1).

La connexion du téléphone 10 au réseau RTPC 1 est soumis à des restrictions d'utilisation définies avec l'opérateur de ce réseau. Ces restrictions seront précisées par la suite. Ces restrictions sont mises opérées dans le central 4 du réseau RTPC 1 à partir de programmes appropriés pilotant les différents matériels mis en oeuvre. Ces matériels et ce type de programmes sont connus et ne nécessitent donc pas d'autres précisions.

Le serveur 20 est disposé dans un lieu non accessible aux usagers, par exemple dans les locaux de l'opérateur du réseau de téléphonie publique. La connexion du serveur 20 au réseau RTPC 1 s'effectue au moyen d'une liaison sécurisée appropriée, permettant notamment de traiter de multiples communications simultanément.

Ce serveur 20 est chargé, comme cela sera détaillé ci-après d'établir des sessions d'échange d'informations fiables et authentifiées qui consiste par exemple à identifier de façon certaine les téléphones 10 lors d'un échange d'informations ou encore à encrypter des données afin de sécuriser la communication en cas de besoin.

Ce serveur 20 est formé par un ordinateur, par exemple de type PC fonctionnant sous Windows NT (marque déposée). Tout appel parvient à un port d'entrée du serveur non figuré qui est écouté en permanence, puis analysé par une application logicielle appropriée par exemple en langage Java (marque déposée) et routé ensuite vers le destinataire demandé : abonné ou serveur délivrant un service.

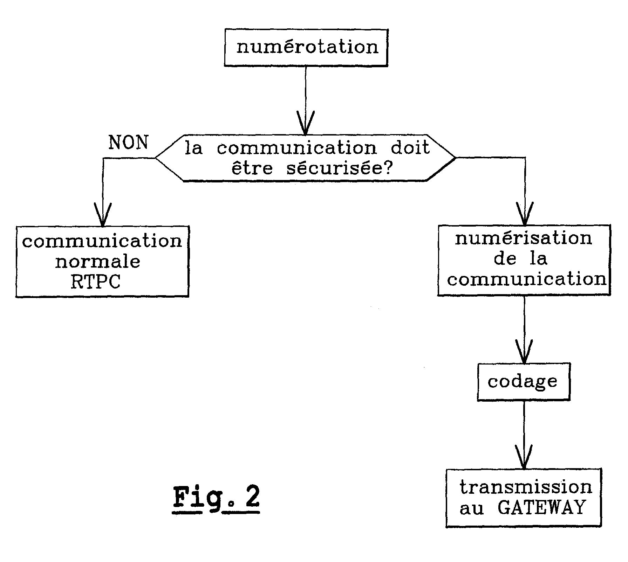

En se reportant à la figure 2, le procédé de sécurisation des appels selon l'invention va maintenant être décrit.

Pour sécuriser l'usage du téléphone 10 et éviter des fraudes au préjudice de l'opérateur de téléphonie publique, il est donc important d'interdire les utilisations non autorisées du téléphone 10 et de la ligne téléphonique qui relie celui-ci au réseau RTPC c'est-à-dire au CLR ou au CAA.

Cette interdiction peut porter sur tous les appels émis par le téléphone 10 ou bien encore ne porter que sur une partie des appels.

Conformément à la présente invention, le procédé de sécurisation consiste donc à différentier les appels en deux groupes, celui des appels devant être sécurisés et celui des appels pour lesquels la sécurisation n'est pas nécessaire et à appliquer à chaque type d'appel un traitement approprié.

Les critères pour sécuriser un appel peuvent être divers et variés et adaptés notamment par l'opérateur du réseau de téléphonie publique à ses besoins spécifiques. Un critère peut par exemple être le coût de la communication, dès que le coût de la communication à destination d'un abonné ou d'un serveur dépasse un certain montant alors la communication est sécurisée.

Comme cela a été précisé ci-dessus le téléphone 10 est adapté pour accéder de façon payante à des abonnés ou à des services. Le prix payé par l'usager pour ces prestations est bien évidemment défini par l'opérateur de téléphonie publique en fonction de leur coût de revient. Ainsi, le prix d'un appel local ne sera pas le même que celui d'un appel national ou international, de même pour les services.

Conformément aux règles internationales, le plan de numérotation des services et des abonnés téléphoniques obéit à un ensemble de règles établies par les organismes de normalisation l'ETSI, l'ECTRA et l'UIT (cf. les recommandations E.164, E.213 et X.121).

La différentiation entre les appels à sécuriser et les autres peut donc être facilement établie à partir des seuls numéros d'appel.

La première étape du procédé consiste donc à détecter la prise de ligne lors du décrochage du combiné 104 et la numérotation qui s'en suit. Lorsqu'un usager décroche le combiné 104, le signal de décroché est perçu par des moyens appropriés lesquels en informent le microprocesseur par l'envoi d'un signal caractéristique, celui-ci initiasse alors le déroulement du programme de sécurisation de la ligne selon l'invention.

Pendant la saisie par l'usager du numéro de téléphone appelé, le système de mise en oeuvre du procédé selon l'invention enregistre ce numéro formé, dans le cas d'un poste téléphonique à fréquences vocales, par une suite de signaux DTMF selon la recommandation Q.23 de l'UIT (Union Internationale des Télécommunications) et les convertit en code binaire pour être traité par le microcontrôleur.

Le microcontrôleur opère alors l'analyse du numéro appelé et détermine, à partir de tables appropriées stockées dans une mémoire appropriée (EPROM ou RAM non volatile), s'il s'agit d'un appel à sécuriser parce qu'appartenant par exemple au groupe des communications à coûts élevés (appels nationaux ou internationaux, serveurs...) ou bien s'il s'agit d'un appel pouvant ne pas être sécurisé parce que de faible coût (appel local, numéro d'urgence, etc.).

S'il s'agit d'un numéro d'appel ne nécessitant pas de sécurisation (appel local...), alors le numéro de téléphone saisi par l'usager sur le clavier du poste téléphonique est adressé au central téléphonique CLR/CAA afin que ce dernier établisse grâce à ses commutateurs, une ligne avec le numéro téléphonique appelé et adresse à ce dernier un signal de sonnerie.

Le microcontrôleur supervise la ligne pour déterminer si la partie appelée a bien décroché et qu'une communication a bien été établie. Si tel est bien le cas, alors des impulsions tarifaires sont régulièrement adressées au système d'encaissement que ce soit au lecteur de carte pour griller les unités correspondantes d'une carte téléphonique prépayée ou encore au sélecteur de pièces de monnaie pour encaisser les pièces. Ces impulsions tarifaires sont produites par le microcontrôleur à partir de tables de tarif stockées dans une mémoire appropriée du téléphone ou bien encore par le central téléphonique 4 et reçues sur la ligne parallèlement à la communication en cours.

L'appel ayant été identifié comme devant être sécurisé (appel national ou international, serveur Audiotel...), le microcontrôleur déclenche alors un traitement approprié de l'appel.

Ce traitement consiste à faire transiter les échanges d'informations avec le numéro de téléphone appelé que ce soit de la voix ou des données par le serveur GATEWAY 20.

Pour ce faire, le microcontrôleur appelle le serveur GATEWAY 20 pour établir la communication. Les informations transmises par l'usager sous forme non numérique comme la voix, sont numérisées par un algorithme de traitement du signal approprié de type CODEC, puis codées et compressées selon les recommandations G.723.1 (liée à H.323) en MP-MLQ/ACELP à 5,3 et 6,3 kbit/s ou G.728 en LD-CELP à 16kbit/s ou G.729 en CS-ACELP à 8kbit/s. Bien évidemment, ces normes de l'UIT ne sont données qu'à titre indicatif.

Les informations ainsi codées sont adressées par paquets au serveur 20 via un modem et le réseau RTPC, à travers une session utilisant les protocoles IP et UDP, à charge pour ce serveur de les diriger vers le numéro appelé par l'usager.

Ce traitement de la voix est appelé VoIP. Bien évidemment toute autre méthode disponible est également utilisable comme le VoFR (Voice over Frame Relay) ou VtoA (Voice Telephony over ATM).

Lorsque le serveur GATEWAY 20 reçoit l'appel en provenance du téléphone 10 il traite la requête par une application appropriée permettant le contrôle et l'établissement d'une session au sens protocolaire du terme. Une interface standard (« socket ») est alors ouverte et la requête est ré-émise vers le numéro appelé après un traitement adapté à ce dernier. En particulier, si le poste appelé est un numéro d'abonné ne disposant que d'un poste téléphonique classique, le serveur procède via des cartes de conversion au traitement inverse de celui opéré par le téléphone et renvoie vers ce poste un signal de voix décodé.

Les informations en provenance du numéro appelé transitent également par le serveur 20 et font donc l'objet d'un traitement symétrique à celui des données reçues par ce numéro, elles sont codées par le serveur 20 et à leur arrivée décodées par le téléphone public 10.

Dans le cadre de la présente invention, le serveur 20 présente donc un certain nombre de fonctions assurées par des moyens matériels et logiciels appropriés. Une première fonction consiste à orienter les informations reçues du téléphone 10 vers le numéro d'appel demandé, il s'agit là d'une fonction de re-routage des appels. Le serveur 20 peut choisir pour opérer le re-routage le réseau de télécommunication le plus approprié, cela pouvant être le réseau RTPC 1 ou bien encore tout autre réseau auquel le serveur 20 peut avoir accès comme par exemple le réseau Internet.

Une autre fonction consiste, quand cela est nécessaire, à traduire les données transmises au format des postes d'abonnés ou serveurs appelés. Une autre fonction est de synchroniser et de réguler les sessions d'échanges d'informations entre le téléphone public et les numéros appelés. Une autre fonction est encore d'établir des sessions d'échanges d'informations fiables et authentifiées ou encore d'encrypter tout ou partie des données échangées.

Parallèlement au traitement des informations échangées entre le téléphone public 10 et le numéro de téléphone appelé, le téléphone 10 et le serveur 20 s'adressent des données de sécurisation qui peuvent être cryptées par des algorithmes appropriés comme le SSL (Socket Secure Layer) et qui garantissent que la session traitée par le serveur GATEWAY 20 est bien établie avec le téléphone public 10 et non pas avec un téléphone connecté directement sur la ligne de liaison 2.

Le serveur 20 peut également fournir des informations utiles au fonctionnement du téléphone 10 comme par exemple les impulsions de taxation de la communication en cours, ainsi que le téléphone 10 n'a plus à gérer de tables de tarifs pour tous les appels sécurisés.

En effet, parallèlement aux transferts de données entre le téléphone 10 et le poste appelé via le serveur 20, le microcontrôleur du téléphone procède comme précédemment vis-à-vis d'un appel local, à savoir qu'il supervise la communication et adresse régulièrement des impulsions tarifaires au système d'encaissement à cartes à ou pièces et ce, selon le coût de la communication déterminé à partir d'une table de tarif appropriée à l'appel, table tarifaire stockée dans une mémoire appropriée du téléphone public ou bien encore à partir des informations tarifaires fournies par le serveur 20 et communiquées au téléphone 10.

Pour renforcer encore la sécurité du système de téléphonie public selon l'invention, la connexion du téléphone 10 au réseau RTPC 1 est soumise à des restrictions d'utilisation définies avec l'opérateur de ce réseau. Un exemple de restriction consiste en ce que tous les appels devant être sécurisés et donc devant transiter par le serveur 20, ne puissent être pris en compte et donc acheminés par le central 4. Ainsi si un fraudeur accède à la ligne de liaison 2, il ne pourra accéder qu'à un nombre limité de numéros de téléphone. Un autre exemple de restriction, consiste à re-diriger tout appel reçu par le central depuis la ligne 2 et concernant un numéro à sécuriser vers le serveur 20, lequel s'il détecte un appel ne venant pas du téléphone 10 est alors à même de déclencher une alerte appropriée.

Pour réduire le temps de traitement d'un appel routé via le GATEWAY 20 et par conséquent le temps d'établissement de la communication avec le poste appelé, le téléphone public se connecte au GATEWAY 20 le plus tôt possible et de préférence en parallèle à l'opération de numérotation effectuée par l'usager. Il n'est, en effet, pas nécessaire d'attendre la fin de la numérotation pour pouvoir discriminer les appels nécessitant une sécurisation car généralement cette discrimination s'opère sur les tout premiers chiffres des numéros appelés.

Pour ce faire le microcontrôleur procède à l'analyse des numéros saisis de façon dynamique et sitôt qu'il a identifié un appel devant être sécurisé, il déclenche l'appel vers le serveur GATEWAY 20.

Par ailleurs, dans le cas où l'usager raccrocherait le téléphone avant l'établissement effectif de la communication avec le destinataire final et dans le cas où il s'agirait d'une communication devant être sécurisée, toujours pour optimiser le temps de connexion, on peut prévoir de ne pas couper immédiatement la liaison entre le publiphone et le GATEWAY 20 en postulant qu'il s'agit là probablement d'une erreur de l'appelant et que ce dernier va réitérer son appel. Cette connexion entre le téléphone public et le GATEWAY 20 est maintenue pendant une période de temporisation prédéterminée. Cela permet encore de raccourcir le temps de traitement si effectivement l'appelant réitère son appel devant être sécurisé.

Dans ce cas où le téléphone public maintient la liaison avec le GATEWAY 20, il simulera alors les signaux caractéristiques d'une prise de ligne lors du décroché du combiné par l'appelant et ce, de façon que l'appelant ne soit pas surpris par une absence de tonalité.

De même pour éviter que l'appelant ne soit perturbé par l'appel fait par le téléphone public au GATEWAY 20 dans le cas d'une communication sécurisée avant même la fin de la numérotation, appel qui est normalement audible dans l'écouteur du combiné, le microcontrôleur du téléphone public est programmé pour gérer les signaux à destination de cet écouteur et ne faire passer au niveau du combiné, pendant la phase de numérotation, non pas les signaux réellement émis sur la ligne mais une simulation des tonalités correspondantes aux touches enfoncées par l'usager.

Bien évidemment la présente invention n'est pas limitée au seul mode de réalisation illustré, lequel n'a été donné qu'à titre d'exemple.

## Revendications

1. Système de téléphonie publique sécurisé comportant au moins un téléphone public (10) relié à un réseau de télécommunication (1) et un dispositif de sécurisation apte à superviser les échanges d'informations entre ledit téléphone public et au moins une partie des numéros appelés, **caractérisé en ce que** ledit dispositif de sécurisation est formé par un serveur à distance (20) par lequel transitent les appels à sécuriser, ledit téléphone public (10) comportant des premiers moyens pour discriminer les appels devant être sécurisés à partir des premiers chiffres des numéros appelés, des seconds moyens pour se connecter audit serveur (20) sitôt identifié un appel à sécurisé et avant même la fin de la numérotation, et des troisièmes moyens pour adresser audit serveur (20) les informations échangées entre ledit téléphone et les numéros appelés, sous une forme appropriée.

2. Système de téléphonie publique sécurisé selon la revendication 1, **caractérisé en ce que** ledit téléphone (10) comporte des moyens pour transmettre les communications audit serveur (20) sous la forme de données numérisées codées.

3. Système de téléphonie publique sécurisé selon la revendication 2, **caractérisé en ce que** ledit téléphone (10) est équipé du protocole IP de communication Internet et **en ce que** les sessions d'échanges d'informations entre ledit téléphone (10) et ledit serveur (20) utilisent ledit protocole IP, la voix étant codée en VoIP.

4. Système de téléphone publique sécurisé selon l'une quelconque des revendications précédentes, **caractérisé en ce que** ledit téléphone (10) comporte des moyens de sélection aptes à diriger une partie des appels vers ledit serveur (20), les appels dirigés vers ledit serveur (20) étant sélectionnés selon le coût des communications.

5. Système de téléphonie publique sécurisé selon l'une quelconque des revendications précédentes, **caractérisé en ce que** ledit téléphone (10) est connecté au réseau de télécommunication (1) par l'intermédiaire d'un central téléphonique (4) et **en ce que** ledit central (4) comprend des moyens aptes à refuser toute communication directe avec un numéro d'appel répondant auxdits critères de sélection prédéterminés.

6. Système de téléphonie publique sécurisé selon l'une quelconque des revendications précédentes, **caractérisé en ce que** ledit téléphone (10) adresse les appels distincts des appels à sécuriser identifiés, sans traitement particulier et en particulier sans codage numérique de la voix.

7. Système de téléphonie publique sécurisé selon l'une quelconque des revendications précédentes, **caractérisé en ce que** ledit serveur (20) comprend des moyens aptes à synchroniser et à réguler les sessions d'échanges d'informations entre ledit téléphone (10) et les numéros appelés transitant par ledit serveur (20).

8. Système de téléphonie publique sécurisé selon l'une quelconque des revendications précédentes, **caractérisé en ce que** ledit serveur (20) comprend des moyens aptes à authentifier les sessions d'échanges d'informations entre ledit téléphone (10) et les numéros appelés transitant par ledit serveur (20).

9. Système de téléphonie publique sécurisé selon l'une quelconque des revendications précédentes, **caractérisé en ce que** ledit serveur (20) comporte des moyens appropriés pour transférer des données audit téléphone (10) parallèlement aux sessions d'échanges d'informations entre ledit téléphone et les numéros appelés transitant par ledit serveur (20), lesdites données concernant notamment la taxation desdites sessions.
